# EUROPEAN PATENT APPLICATION

(11) **EP 4 531 034 A1**
(43) Date of publication of application: **02.04.2025**
(21) Application number: 24202847.0
(22) Date of filing: 26.09.2024
(51) Int. Cl.: G09G 5/377, B60K 35/81

(54) **CIRCUIT DEVICE AND DISPLAY SYSTEM**

(30) Priority: 28.09.2023 JP 2023167263
(71) Applicant: Seiko Epson Corporation, Tokyo 160-8801 (JP)
(72) Inventor: TAKIKAWA, Naoya, Suwa-shi, 392-8502 (JP); AKIBA, Yasutoshi, Suwa-shi, 392-8502 (JP)
(74) Representative: Lewis Silkin LLP

(57) **Abstract**

A circuit device includes an overlay processing circuit and an error detection circuit. The overlay processing circuit performs overlay processing of first input image data on a first area of second input image data and outputs a result of the overlay processing as output image data. The error detection circuit calculates a first error code value corresponding to image data of the first area of the output image data and a second error code value corresponding to image data of a second area not overlapping the first area of the output image data. The error detection circuit performs error detection on the output image data by comparing the first error code value with a first expected value and comparing the second error code value with a second expected value.

## Description

The present application is based on, and claims priority from JP Application Serial Number 2023-167263, filed September 28, 2023, the disclosure of which is hereby incorporated by reference herein in its entirety.

### BACKGROUND

### 1. Technical Field

The present disclosure relates to a circuit device and a display system.

### 2. Related Art

JP-A-2022-153871 discloses a video processing device that performs image error detection. The video processing device generates a composite image by replacing one or a plurality of areas of an input image with an image for composition and detects whether there is abnormality in the composite image.

In image error detection, an expected value of an error code value is compared with the error code value calculated from the image. When another image is combined with the input image, an expected value of an error code value cannot be obtained for the combined image. For this reason, there is a problem in that error detection cannot be appropriately perform on the combined image. JP-A-2022-153871 describes calculating a CRC value for an OSD area of a composite video and comparing the calculated CRC value with a CRC expected value, but does not refer to the outside of the OSD area. Also in a case where the input image is split into two or more images, similarly, there is a problem in that error detection cannot be appropriately performed on the split images.

### SUMMARY

An aspect of the present disclosure relates to a circuit device including: an overlay processing circuit that performs overlay processing of first input image data on a first area of second input image data and outputs a result of the overlay processing as output image data; and an error detection circuit that calculates a first error code value corresponding to image data of the first area of the output image data and a second error code value corresponding to image data of a second area not overlapping the first area of the output image data, and performs error detection on the output image data by comparing the first error code value with a first expected value which is an expected value of the first error code value and comparing the second error code value with a second expected value which is an expected value of the second error code value.

Another aspect of the present disclosure relates to a display system including: the circuit device described above; and a display device on which the output image data is displayed.

### BRIEF DESCRIPTION OF THE DRAWINGS

FIG. 1 is a diagram illustrating an example of configuration of an electronic apparatus and a display system.
FIG. 2 is a diagram illustrating a first configuration example of a circuit device.
FIG. 3 is a diagram illustrating an operation of the circuit device in the first configuration example.
FIG. 4 is a diagram illustrating a second configuration example of a circuit device.
FIG. 5 is a first flowchart example illustrating processing performed by the circuit device in the second configuration example.
FIG. 6 is a second flowchart example illustrating processing performed by the circuit device in the second configuration example.
FIG. 7 is a diagram illustrating overlay processing and area determination in a case of using an α channel.
FIG. 8 is a diagram illustrating a third configuration example of a circuit device.
FIG. 9 is a diagram illustrating a fourth configuration example of a circuit device.
FIG. 10 is a diagram illustrating an operation of the circuit device in the fourth configuration example.
FIG. 11 is a diagram illustrating effective scanning lines in image splitting.

### DESCRIPTION OF EMBODIMENTS

Hereinafter, a preferred embodiment of the present disclosure will be described in detail. It should be noted that the present embodiment described below is not intended to unduly limit the content described in the scope of claims, and all components described in the present embodiment are not necessarily essential requirements.

### 1. Electronic Apparatus and Display System

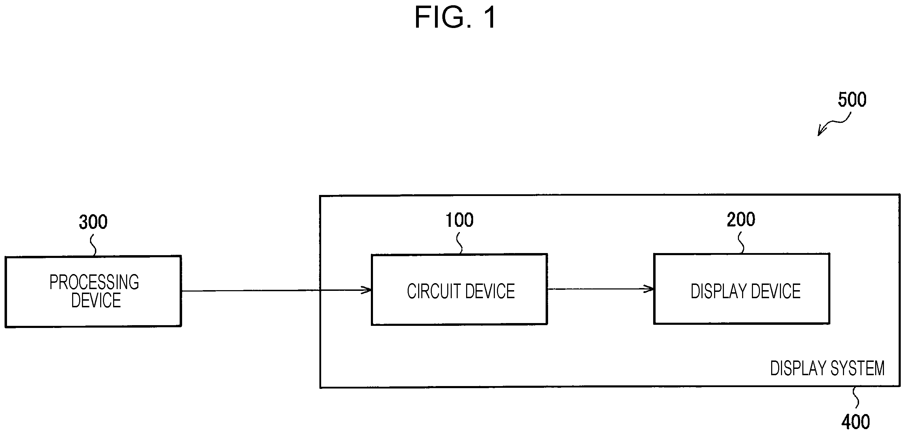

FIG. 1 illustrates an example of configuration of an electronic apparatus and a display system including a circuit device of the present embodiment. An electronic apparatus 500 includes a processing device 300 and a display system 400. An example of the electronic apparatus 500 may be an in-vehicle display apparatus including a meter panel, a center information display, a head-up display, or an electronic mirror, a television apparatus, or an information processing apparatus including a display.

The display system 400 includes a circuit device 100 and a display device 200. In a case where the circuit device 100 has an image splitting function, the display system 400 may include a plurality of display devices.

Image data is input to the circuit device 100 from the processing device 300. The processing device 300 is, for example, a processor such as a CPU, a microcomputer, a DSP, an ASIC, or an FPGA. CPU is an abbreviation for Central Processing Unit. DSP is an abbreviation for Digital Signal Processor. ASIC is an abbreviation for Application Specific Integrated Circuit. FPGA is an abbreviation for Field Programmable Gate Array.

The circuit device 100 is a display controller that perform display control of the display device 200. The circuit device 100 may further include a display driver that drives a display panel of the display device 200. The circuit device 100 is, for example, an integrated circuit device in which a plurality of circuit elements are integrated on a semiconductor substrate. Hereinafter, contents related to an image error detection of the present embodiment will be described, and a display controller function and a display driver function will not be described.

The circuit device 100 receives first input image data and second input image data from the processing device 300. The circuit device 100 performs overlay processing on the first input image data and the second input image data and transmits overlaid output image data to the display device 200. The circuit device 100 performs error detection on the output image data. Alternatively, the circuit device 100 receives the input image data from the processing device 300 and splits the input image data into a plurality of pieces of split image data. In this case, the display system 400 includes a plurality of display devices. The circuit device 100 transmits each of the split image data to a corresponding one of the plurality of display devices. The circuit device 100 performs error detection on each of the pieces of split image data. In any of the above cases, image data corresponding to a plurality of images is input to the circuit device 100. A mode of transmitting such image data corresponding to the plurality of images may be either single stream transmission or multi-stream transmission.

The display device 200 is a liquid crystal display device, an EL display device, or the like. EL is an abbreviation for Electro-Luminescence. As an example, when the display system 400 is an in-vehicle display system, the display device 200 is a cluster panel, a navigation display, a head-up display, or the like. The display device 200 includes, for example, a display driver, a display panel, and a backlight. Alternatively, when the display device 200 is a head-up display, the display device 200 further includes a projecting optical system.

### 2. First Configuration Example and Second Configuration Example

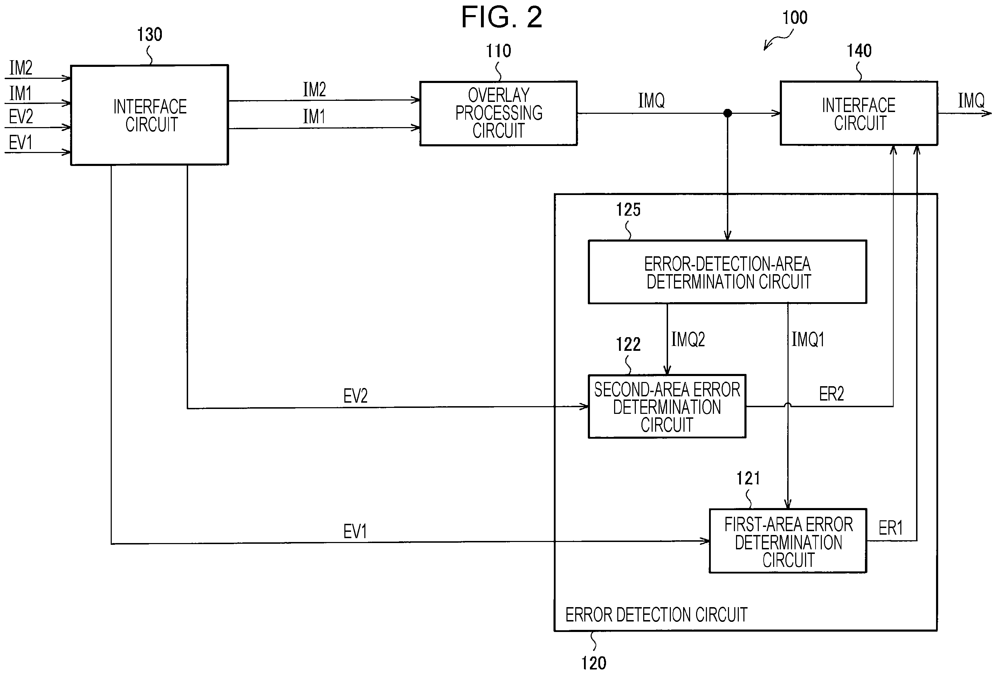

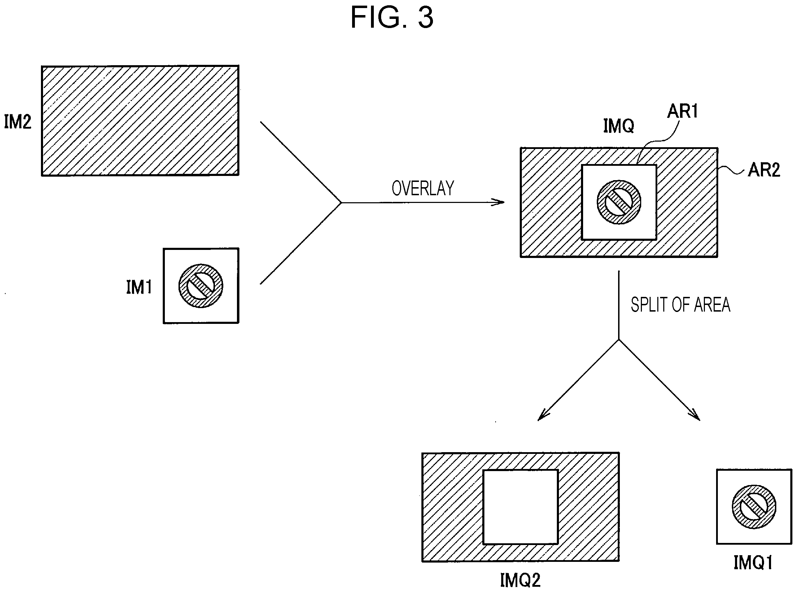

FIG. 2 illustrates a first configuration example of the circuit device. The circuit device 100 includes an overlay processing circuit 110, an error detection circuit 120, an interface circuit 130, and an interface circuit 140. FIG. 3 is a diagram illustrating an operation of the circuit device in the first configuration example. Although an example of overlaying one foreground image on a background image is described below, two or more foreground images may be overlaid on the background image. In that case, error detection may be performed on the background image and each of the foreground images.

The interface circuit 130 receives first input image data IM1, second input image data IM2, a first expected value EV1, and a second expected value EV2 from the processing device 300. The interface circuit 130 includes, for example, an image interface circuit conforming to the Open LVDS Display Interface standard, the display port standard, or the Display Serial Interface 2 standard in the Mobile Industry Processor Interface. Further, the interface circuit 130 may include an interface circuit conforming to the Serial Peripheral Interface standard or the Inter-Integrated Circuit standard for communicating expected values.

The overlay processing circuit 110 performs processing to overlay the first input image represented by the first input image data IM1 on a first area AR1 of the second input image represented by the second input image data IM2, and outputs output image data IMQas a result. The overlay processing here refers to processing of superimposing the first input image on a part of the second input image with the second input image as a background image and the first input image as a foreground image. Hereinafter, the "image represented by the image data" is also simply referred to as "image data". For example, such description that the overlay processing circuit 110 overlays the first input image data IM1 on the first area AR1 of the second input image data IM2 will be given. The first area AR1 may be set from, for example, the processing device 300 via the interface circuit 130, or may be set in advance in a non-volatile memory (not illustrated). An area excluding the first area AR1 from the entire area of the output image data IMQ is defined as a second area AR2. An image of the first area AR1 is also referred to as a foreground image, and an image of the second area AR2 is also referred to as a background image. The second area AR2 may be any area that does not overlap the first area AR1. That is, when there are a plurality of foreground images to be overlaid, the second area AR2 is an area excluding areas of the plurality of foreground images from the entire area of the output image data IMQ.

The interface circuit 140 outputs the output image data IMQ to the display device 200. The interface circuit 140 may be an image interface circuit of the various standards described above.

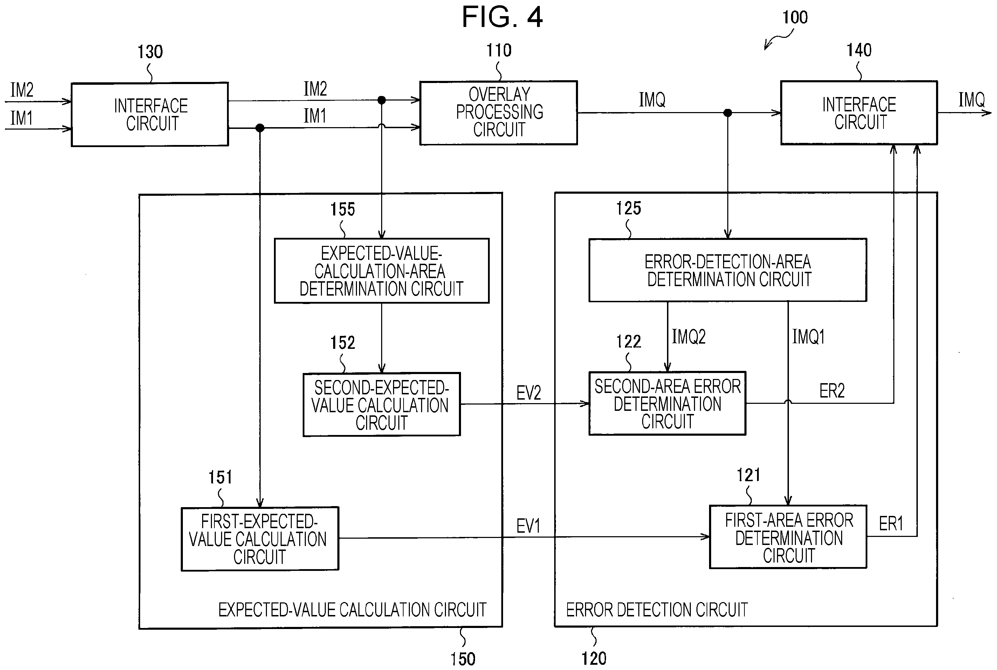

The error detection circuit 120 uses the first expected value EV1 received by the interface circuit 130 to perform error detection on the image of the first area AR1 in the output image data IMQ. In addition, the error detection circuit 120 uses the second expected value EV2 received by the interface circuit 130 to perform error detection on the image of the second area AR2 in the output image data IMQ. The first expected value EV1 and the second expected value EV2 are calculated by the processing device 300. For example, the processing device 300 performs a calculation similar to that of an expected-value calculation circuit 150 in FIG. 4, which will be described below. The error detection circuit 120 includes an error-detection-area determination circuit 125, a first-area error determination circuit 121, and a second-area error determination circuit 122.

The error-detection-area determination circuit 125 determines whether each pixel of the output image data IMQ belongs to any area. The first area AR1 is designated by information capable of specifying coordinates of pixels. For example, when the first area AR1 is a rectangle, the first area AR1 is designated by coordinates of one vertex of the rectangle, a width of the rectangle, and a height of the rectangle. The output image data IMQ is, for example, stream data in which each pixel data is transmitted sequentially. The error-detection-area determination circuit 125 receives pixel data sequentially as stream data, and determines, from coordinates of a pixel corresponding to the pixel data and information designating the first area AR1, whether the pixel belongs to the first area AR1 or the second area AR2. The error-detection-area determination circuit 125 outputs the pixel data determined to belong to the first area AR1 as first output image data IMQ1 and outputs the pixel data determined to belong to the second area AR2 as second output image data IMQ2.

The first-area error determination circuit 121 calculates a first error code value from the first output image data IMQ1 and compares the first error code value with the first expected value EV1. The first-area error determination circuit 121 outputs, as a comparison result, a first error detection signal ER1 to the interface circuit 140. The second-area error determination circuit 122 calculates a second error code value from the second output image data IMQ2 and compares the second error code value with the second expected value EV2. The second-area error determination circuit 122 outputs, as a comparison result, a second error detection signal ER2 to the interface circuit 140.

For the error code value and the expected value, a code of the same data error check mode is used. The data error check mode may be of various modes, for example, a CRC mode, a checksum mode, a parity check mode, or a Hamming code mode. CRC is an abbreviation for Cyclic Redundancy Check.

The interface circuit 140 stops outputting the output image data IMQ when at least one of the first error detection signal ER1 and the second error detection signal ER2 indicates an error. The use of the error detection signal is not limited thereto. For example, the circuit device 100 may include a register that stores the first error detection signal ER1 and the second error detection signal ER2. The processing device 300 may read the first error detection signal ER1 and the second error detection signal ER2 from the register via the interface circuit 130. Alternatively, the overlay processing circuit 110 may stop the overlay processing when at least one of the first error detection signal ER1 and the second error detection signal ER2 indicates an error.

FIG. 4 illustrates a second configuration example of the circuit device. The circuit device 100 includes an expected-value calculation circuit 150, an overlay processing circuit 110, an error detection circuit 120, an interface circuit 130, and an interface circuit 140. Hereinafter, differences from the first configuration example will be mainly described.

The expected-value calculation circuit 150 calculates the first expected value EV1 from the first input image data IM1 and calculates the second expected value EV2 from the second input image data IM2. The expected-value calculation circuit 150 includes an expected-value-calculation-area determination circuit 155, a first-expected-value calculation circuit 151, and a second-expected-value calculation circuit 152.

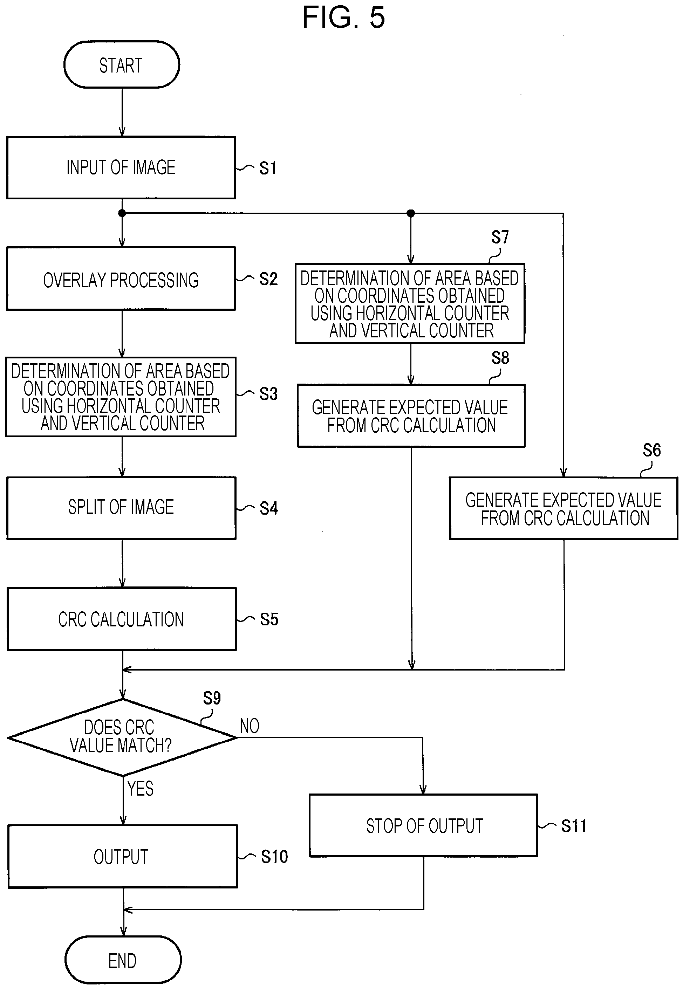

FIG. 5 illustrates an example of a first flowchart of processing performed by the circuit device in the second configuration example. Processing other than steps S6 to S8 can also be applied to the first configuration example.

In step S1, an image is input to the circuit device 100. That is, the interface circuit 130 receives first input image data IM1 and second input image data IM2 from the processing device 300.

In step S2, the overlay processing circuit 110 performs overlay processing. That is, the overlay processing circuit 110 performs overlay processing on the first input image data IM1 and the second input image data IM2 and outputs output image data IMQ as a result.

In step S3, the error-detection-area determination circuit 125 determines, based on coordinates using a horizontal counter and a vertical counter, an area to which each pixel of the output image data IMQ belongs. That is, the horizontal counter counts coordinates of pixels in a horizontal scanning line direction, and the vertical counter counts coordinates of pixels in a vertical scanning line direction. The error-detection-area determination circuit 125 determines whether the coordinates of the pixels indicated by the outputs of the horizontal counter and the vertical counter belong to the first area AR1.

In step S4, the error-detection-area determination circuit 125 splits an image. That is, the error-detection-area determination circuit 125 splits, based on the result of the area determination in step S3, the output image data IMQ into the first output image data IMQ1 and the second output image data IMQ2. The second output image data IMQ2 is image data excluding the image data of the first area AR1 from the output image data IMQ.

In step S5, a CRC value is calculated as an error code value. Note that the error code value is not limited to the CRC value as described above. Specifically, the first-area error determination circuit 121 calculates a first error code value from the first output image data IMQ1, and the second-area error determination circuit 122 calculates a second error code value from the second output image data IMQ2.

In step S6, the first-expected-value calculation circuit 151 generates an expected value by CRC calculation. Note that the expected value is not limited to the CRC value as described above. Specifically, the first-expected-value calculation circuit 151 calculates a first expected value EV1 from the first input image data IM1.

In step S7, the expected-value-calculation-area determination circuit 155 determines, based on the coordinates obtained by using the horizontal counter and the vertical counter, an area to which each pixel of the second input image data IM2 belongs. That is, the expected-value-calculation-area determination circuit 155 determines whether the coordinates of the pixels indicated by the outputs of the horizontal counter and the vertical counter belong to the second area AR2.

In step S8, the second-expected-value calculation circuit 152 generates an expected value by CRC calculation. Note that the expected value is not limited to the CRC value as described above. Specifically, the second-expected-value calculation circuit 152 calculates a second expected value EV2 from the image data of the second area AR2 out of the second input image data IM2.

In step S9, the first-area error determination circuit 121 and the second-area error determination circuit 122 determines whether the CRC value matches the expected value. That is, the first-area error determination circuit 121 compares the first error code value with the first expected value EV1 and outputs the first error detection signal ER1 as a result. The second-area error determination circuit 122 compares the first error code value with the first expected value EV1 and outputs the first error detection signal ER1 as a result.

When it is determined in step S9 that the CRC value matches the expected value, the interface circuit 140 outputs the output image data IMQ in step S10. That is, when the first error code value matches the first expected value EV1 and the second error code value matches the second expected value EV2, the interface circuit 140 outputs the output image data IMQ.

When it is determined in step S9 that the CRC value does not match the expected value, the interface circuit 140 stops outputting the output image data IMQ in step S11. That is, when any one of the condition that the first error code value does not match the first expected value EV1 and the condition that the second error code value does not match the second expected value EV2 is satisfied, the interface circuit 140 stops outputting the output image data IMQ.

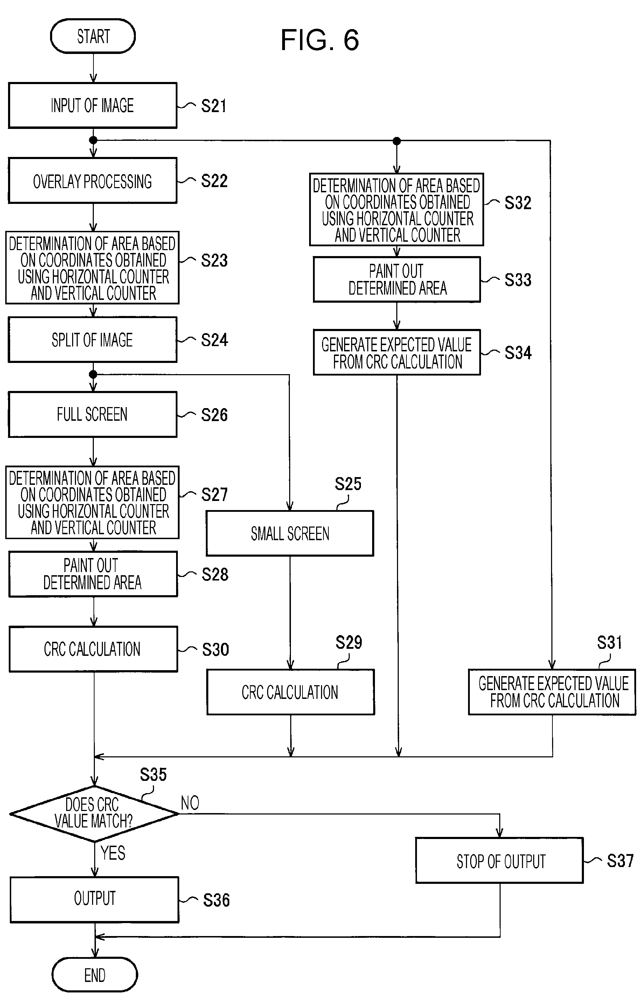

FIG. 6 illustrates an example of a second flowchart of the processing performed by the circuit device in the second configuration example. Processing other than steps S31 to S34 can also be applied to the first configuration example. In the example of the second flowchart, the error code value and the expected value are calculated, in the error detection of the background image, from an image in which the first area of the foreground image is painted out.

Steps S21 to S23 are the same as steps S1 to S3 in FIG. 5.

In step S24, the error-detection-area determination circuit 125 splits an image. That is, the error-detection-area determination circuit 125 splits, based on the result of the area determination in step S23, the image data of the first area AR1 out of the output image data IMQ as a small screen image data. As shown in step S25, the error-detection-area determination circuit 125 outputs the small screen image data as first output image data IMQ1.

As shown in step S26, the error-detection-area determination circuit 125 uses the output image data IMQ as full-screen image data.

In step S27, the error-detection-area determination circuit 125 determines, based on the coordinates obtained by using the horizontal counter and the vertical counter, an area to which each pixel of the full-screen image data belongs. That is, the error-detection-area determination circuit 125 determines whether the coordinates of the pixels indicated by the outputs of the horizontal counter and the vertical counter belong to the first area AR1. The result of step S23 may be used.

In step S28, the error-detection-area determination circuit 125 paints out the first area AR1 out of the full-screen image data, and outputs the second output image data IMQ2 as a result. Specifically, the error-detection-area determination circuit 125 embeds, in the first area AR1, specific image data having the same image size as the first area AR1. The specific image data may be any image data as long as the data is known image data for which an expected value can be calculated. As an example, the error-detection-area determination circuit 125 replaces pixel data belonging to the first area AR1 with pixel data of a predetermined color. The predetermined color is, for example, black, but is not limited thereto.

In step S29, the first-area error determination circuit 121 calculates a first error code value from the small screen image data, that is, the first output image data IMQ1.

In step S30, the second-area error determination circuit 122 calculates a second error code value from the full-screen image data after painting, that is, the second output image data IMQ2.

In step S31, the first-expected-value calculation circuit 151 calculates a first expected value EV1 from the first input image data IM1.

In step S32, the expected-value-calculation-area determination circuit 155 determines, based on the coordinates obtained by using the horizontal counter and the vertical counter, whether each pixel of the second input image data IM2 belongs to the first area AR1.

In step S33, the expected-value-calculation-area determination circuit 155 paints out the first area AR1 of the second input image data IM2. Specifically, the expected-value-calculation-area determination circuit 155 embeds specific image data in the first area AR1 of the second input image data IM2. The specific image data herein is the same as the image data in step S28.

In step S34, the second-expected-value calculation circuit 152 calculates a second expected value EV2 from the second input image data IM2 after paining.

Steps S35 to S37 are the same as steps S9 to S11 in FIG. 5.

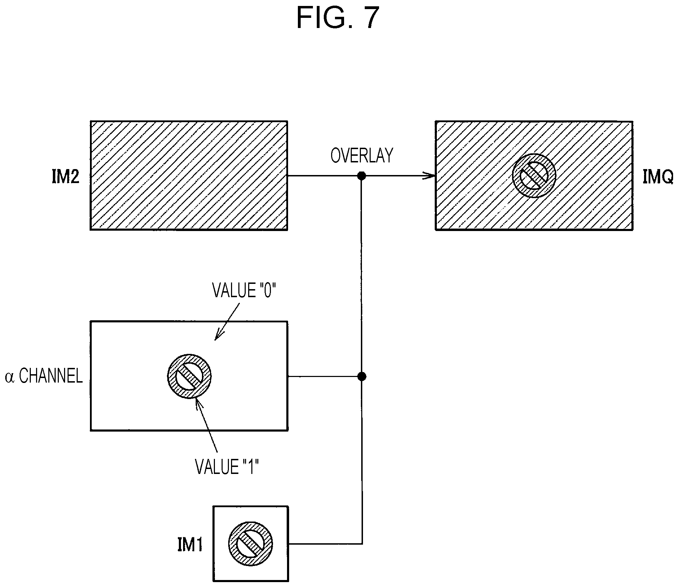

FIG. 7 is a diagram illustrating overlay processing and area determination in a case of using an α channel. Such a method can be applied to either of the first configuration example and the second configuration example.

The interface circuit 130 receives the first input image data IM1, the second input image data IM2, and the α channel. The α channel is assigned to the first input image data IM1 of the foreground image, for example. The overlay processing circuit 110 generates, based on information indicating the arrangement position of the foreground image and the α channel, the α channel having the same number of pixels as the second input image data IM2 of the background image. The α channel may be assigned to the second input image data IM2 from the beginning.

The overlay processing circuit 110 overlays the first input image data IM1 on the second input image data IM2 using the α channel. In the α channel, for example, a first value is set in the foreground portion, and a second value is set in the background portion. The second value is different from the first value. FIG. 7 illustrates an example in which the first value is "1" and the second value is "0". The overlay processing circuit 110 uses the pixel data of the first input image data IM1 for the pixel in which the first value is set to the α channel and uses the pixel data of the second input image data IM2 for the pixel in which the second value is set to the α channel.

The error-detection-area determination circuit 125 and the expected-value-calculation-area determination circuit 155 determine, based on the α channel, an area to which each pixel belongs. In a case of using the α channel of FIG. 7, the error-detection-area determination circuit 125 and the expected-value-calculation-area determination circuit 155 determine that a pixel having the first value "1" set in the α channel is a pixel of the first area AR1, and that a pixel having the second value "0" set in the α channel is a pixel of the second area AR2.

In the present embodiment, the circuit device 100 includes the overlay processing circuit 110 and the error detection circuit 120. The overlay processing circuit 110 performs overlay processing to overlay the first input image data IM1 on the first area AR1 of the second input image data IM2 and outputs the output image data IMQ as a result of the overlay processing. The error detection circuit 120 calculates a first error code value corresponding to the image data of the first area AR1 of the output image data IMQ and a second error code value corresponding to the image data of the second area AR2 not overlapping the first area AR1 of the output image data IMQ. The error detection circuit 120 performs error detection on the output image data IMQ by comparing the first error code value with the first expected value EV1, which is an expected value of the first error code value, and by comparing the second error code value with the second expected value EV2, which is an expected value of the second error code value.

According to the present embodiment, it is possible to appropriately perform error detection on the image on which the overlay processing has been performed. That is, the error detection is performed on the image data of the first area AR1, on which the overlay processing has been performed, out of the output image data IMQ by comparison of the first error code value with the first expected value EV1. Further, the error detection is performed on the second area AR2, on which the overlay processing has not been performed, out of the output image data IMQ by comparison of the second error code value with the second expected value EV2. Due to such error detection, it is possible to substantially perform the error detection on the entire image on which the overlay processing has been performed.

As described with reference to FIG. 6, the error detection circuit 120 may calculate the second error code value from the image data of the second area AR2 of the output image data IMQ and the specific image data embedded in the first area AR1 of the output image data IMQ.

According to the present embodiment, the second error code value is calculated from the output image data IMQ in which the specific image data is embedded in the first area AR1, and thus the error detection can be performed on the second area AR2 of the output image data IMQ. That is, the specific image data is a known image data used for calculation of the second expected value EV2, and the second expected value is calculated from the output image data IMQ in which the specific image data is embedded in the first area AR1. Then, it is possible to perform the error detection on the second area AR2 by comparison of the second error code value with the second expected value EV2.

In addition, as described with reference to FIG. 5, the error detection circuit 120 may calculate the second error code value from the image data of the second area AR2 excluding the image data of the first area AR1 from the output image data IMQ.

According to the present embodiment, the output image data IMQ, from which the image data of the first area AR1 is excluded, is the image data of the second area AR2 itself. By comparison of the second error code value calculated from the image data of the second area AR2 with the second expected value EV2, the error detection can be performed on the second area AR2.

In the present embodiment, the error detection circuit 120 includes the error-detection-area determination circuit 125, the first-area error determination circuit 121, and the second-area error determination circuit 122. The error-detection-area determination circuit 125 determines whether each pixel of the output image data IMQ belongs to the first area AR1 or the second area AR2. The first-area error determination circuit 121 calculates a first error code value for the pixel determined to belong to the first area AR1 and compares the first error code value with the first expected value EV1. The second-area error determination circuit 122 calculates a second error code value for the pixel determined to belong to the second area AR2 and compares the second error code value with the second expected value EV2.

According to the present embodiment, the error-detection-area determination circuit 125 performs the area determination, and thus the output image data IMQ can be split into the image data of the first area AR1 and the image data of the second area AR2. Then, the first-area error determination circuit 121 can calculate the first error code value based on the result of the area determination, and the second-area error determination circuit 122 can calculate the second error code value based on the result of the area determination.

As described with reference to FIG. 3 and the like, the error-detection-area determination circuit 125 may determine, based on coordinate information of the first area AR1, whether each pixel of the output image data IMQ belongs to the first area AR1 or the second area AR2.

The coordinate information of the first area AR1 is information for designating coordinates at which the first input image data IM1 is to be overlaid. Since the area overlaid with the first input image data IM1 is the first area AR1, the error-detection-area determination circuit 125 can determine, based on the coordinate information of the first area AR1, the area to which each pixel belongs.

In addition, as described with reference to FIG. 7, the error-detection-area determination circuit 125 may determine whether each pixel of the output image data IMQ belongs to the first area AR1 or the second area AR2, based on the α channel in which the first value is set to the pixel belonging to the first area AR1 and the second value is set to the pixel belonging to the second area AR2.

According to the present embodiment, it is possible to overlay an image of any shape by using the α channel. Then, it is possible to determine the first area AR1 with any shape in which the image is overlaid, using the α channel.

In the present embodiment, the circuit device 100 may include the interface circuit 130. As described with reference to FIG. 2 and the like, the interface circuit 130 may externally receive the first input image data IM1, the second input image data IM2, the first expected value EV1, and the second expected value EV2.

According to the present embodiment, the interface circuit 130 can receive the first expected value EV1 and the second expected value EV2 which are externally calculated, and the error detection circuit 120 can perform error detection on the output image data IMQ using the received first expected value EV1 and second expected value EV2.

As described with reference to FIG. 4 and the like, the circuit device 100 may include the expected-value calculation circuit 150. The expected-value calculation circuit 150 may calculate the first expected value EV1 and the second expected value EV2, based on the first input image data IM1 and the second input image data IM2.

According to the present embodiment, the first expected value EV1 and the second expected value EV2 can be calculated inside the circuit device 100, and the error detection circuit 120 can perform error detection on the output image data IMQ using the calculated first expected value EV1 and second expected value EV2.

In the present embodiment, the expected-value calculation circuit 150 includes the first-expected-value calculation circuit 151, the expected-value-calculation-area determination circuit 155, and the second-expected-value calculation circuit 152. The first-expected-value calculation circuit 151 calculates a first expected value EV1 from the first input image data IM1. The expected-value-calculation-area determination circuit 155 determines whether each pixel of the second input image data IM2 belongs to the second area AR2. The second-expected-value calculation circuit 152 calculates a second expected value EV2 for the pixel of the second input image data IM2 determined to belong to the second area AR2.

According to the present embodiment, the expected-value-calculation-area determination circuit 155 performs the area determination, and thus the image data of the second area AR2 can be split from the output image data IMQ. Then, the second-expected-value calculation circuit 152 can calculate, based on the result of the area determination, the second expected value EV2.

In the present embodiment, the display system 400 includes the circuit device 100 and the display device 200 on which the output image data IMQ is displayed. The display device 200 may be a head-up display, a meter panel, a center information display, or an electronic mirror.

The head-up display, the meter panel, the center information display, or the electronic mirror is mounted on a moving object such as an automobile. In the display device mounted on the moving object, a so-called Picture-In-Picture technique is used in which another image is superimposed on an image. For example, another video is inserted into a partial area of a video, or a display object such as an icon is superimposed on a video or an image. According to the present embodiment, it is possible to appropriately perform error detection on a display image even when the Picture-In-Picture technique is used.

### 3. Third Configuration Example and Fourth Configuration Example

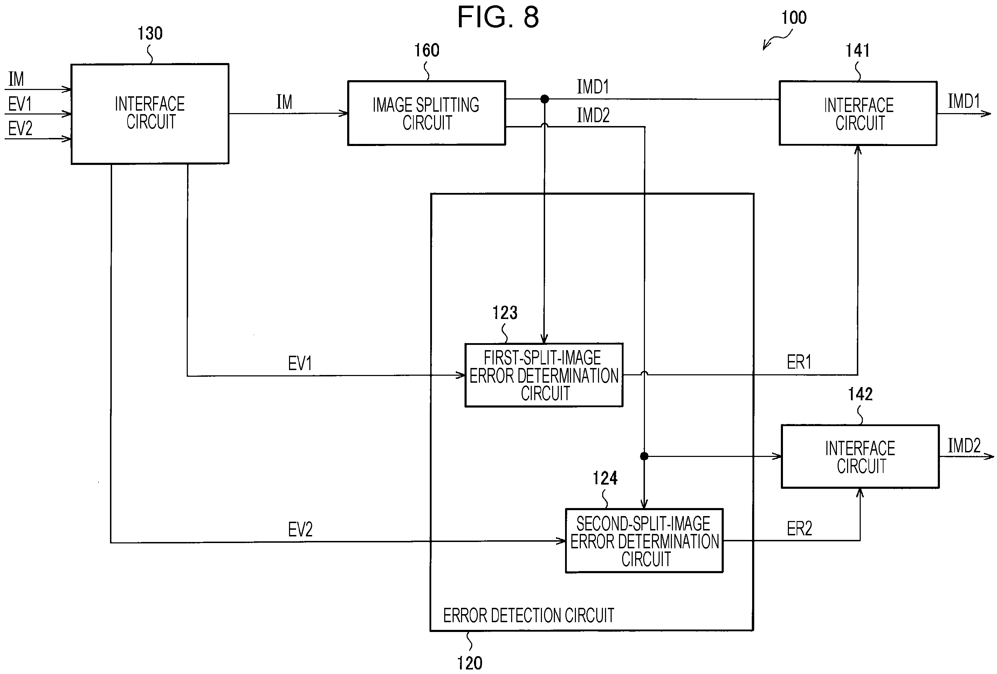

FIG. 8 illustrates a third configuration example of the circuit device. The circuit device 100 includes an image splitting circuit 160, an error detection circuit 120, an interface circuit 130, an interface circuit 141, and an interface circuit 142. Although an example will be described below in which input image data IM is separated into image data of two screens, the input image data IM may be separated into image data of three or more screens. Hereinafter, it is assumed that the display device 200 in FIG. 1 includes a first display device and a second display device.

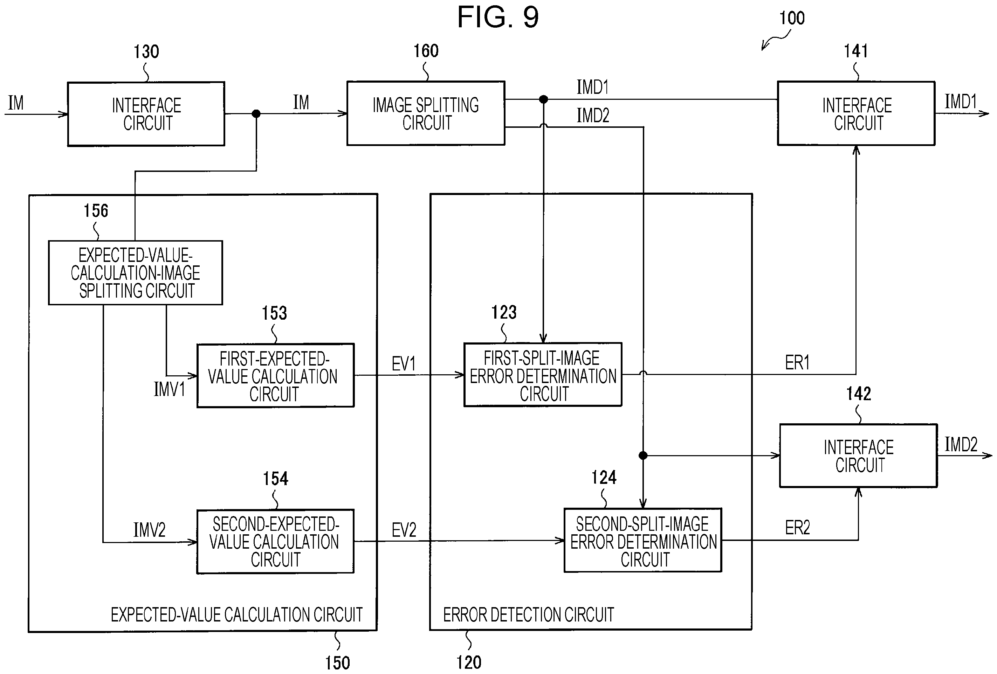

The interface circuit 130 receives input image data IM, a first expected value EV1, and a second expected value EV2 from the processing device 300. The first expected value EV1 and the second expected value EV2 are calculated by the processing device 300. For example, the processing device 300 performs the same calculation as calculation performed by an expected-value calculation circuit 150 illustrated in FIG. 9 which will be described below.

The image splitting circuit 160 performs image split processing. That is, the image splitting circuit 160 separates the input image data IM into first split image data IMD1 and second split image data IMD2. For example, the interface circuit 130 receives the input image data IM, in which a first split image and a second split image are connected into one image, using single-stream transmission. The image splitting circuit 160 separates the single-stream input image data IM into the first split image data IMD1 and the second split image data IMD2. Alternatively, the interface circuit 130 receives the input image data IM using multi-stream transmission. The multi-stream input image data IM includes the first split image data IMD1 and the second split image data IMD2 which are transmitted in a time division manner. The image splitting circuit 160 separates the multi-stream input image data IM into first split image data IMD1 and second split image data IMD2.

The interface circuit 141 outputs the first split image data IMD1 to the first display device. The interface circuit 142 outputs the second split image data IMD2 to the second display device.

The error detection circuit 120 includes a first-split-image error determination circuit 123 and a second-split-image error determination circuit 124. The first-split-image error determination circuit 123 calculates a first error code value from the first split image data IMD1, compares the first error code value and the first expected value EV1, and outputs a first error detection signal ER1 to the interface circuit 141 as a result. The second-split-image error determination circuit 124 calculates a second error code value from the second split image data IMD2, compares the second error code value and the second expected value EV2, and outputs a second error detection signal ER2 to the interface circuit 142 as a result.

For the error code value and the expected value, a code of the same data error check mode is used. The data error check mode may be of various modes as described above, for example, a CRC mode, a checksum mode, a parity check mode, or a Hamming code mode.

The interface circuit 141 stops outputting the first split image data IMD1 when the first error detection signal ER1 indicates an error. The interface circuit 142 stops outputting the second split image data IMD2 when the second error detection signal ER2 indicates an error. The use of the error detection signal is not limited thereto. For example, the circuit device 100 may include a register that stores the first error detection signal ER1 and the second error detection signal ER2. The processing device 300 may read the first error detection signal ER1 and the second error detection signal ER2 from the register via the interface circuit 130. Alternatively, the image splitting circuit 160 may stop the image split processing when at least one of the first error detection signal ER1 and the second error detection signal ER2 indicates an error.

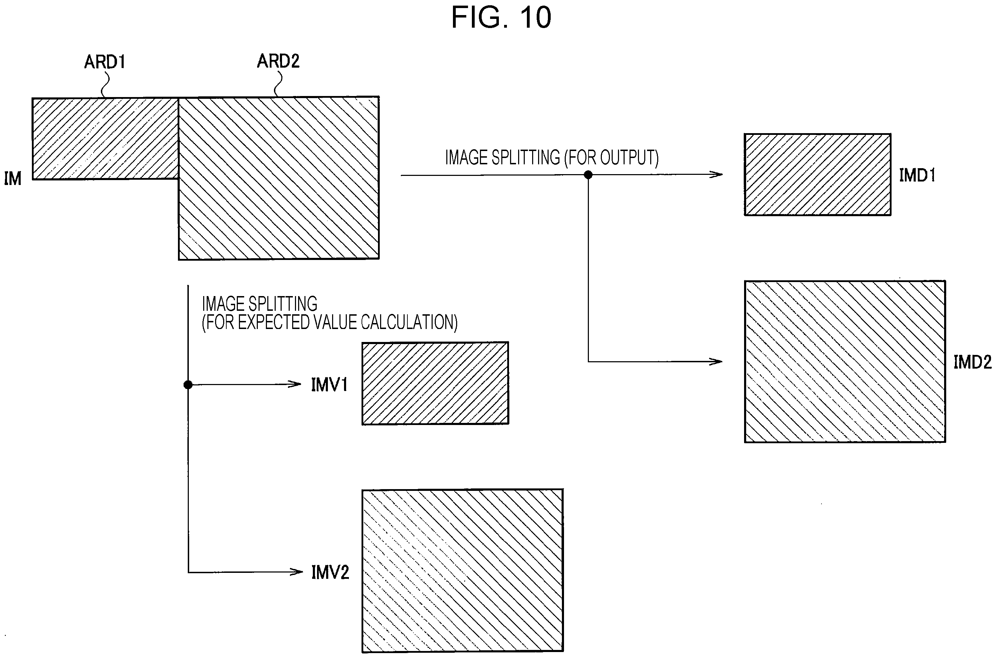

FIG. 9 illustrates a fourth configuration example of the circuit device. The circuit device 100 includes an expected-value calculation circuit 150, an image splitting circuit 160, and error detection circuit 120, an interface circuit 130, an interface circuit 141, and an interface circuit 142. FIG. 10 is a diagram illustrating an operation of the circuit device in the fourth configuration example. Although an example is described herein in which the number of effective scanning lines of the first split image data is different from that of the second split image data, the number of effective scanning lines of the first split image data may be the same as that of the second split image data. Hereinafter, differences from the third configuration example will be mainly described.

The expected-value calculation circuit 150 includes a first-expected-value calculation circuit 153, a second-expected-value calculation circuit 154, and an expected-value-calculation-image splitting circuit 156.

The expected-value-calculation-image splitting circuit 156 separates input image data IM into first-expected-value split image data IMV1 and second-expected-value split image data IMV2. A separating method is the same as that of the image splitting circuit 160. Specifically, the image splitting circuit 160 separates a first area ARD1 of the input image data IM as first split image data IMD1 and separates a second area ARD2 of the input image data IM as second split image data IMD2. At this time, the image splitting circuit 160 separates the first area ARD1 of the input image data IM as first-expected-value split image data IMV1, and separates the second area ARD2 of the input image data IM as second-expected-value split image data IMV2.

The first-expected-value calculation circuit 153 calculates a first expected value EV1 from the first-expected-value split image data IMV1. The second-expected-value calculation circuit 154 calculates a second expected value EV2 from the second-expected-value split image data IMV2.

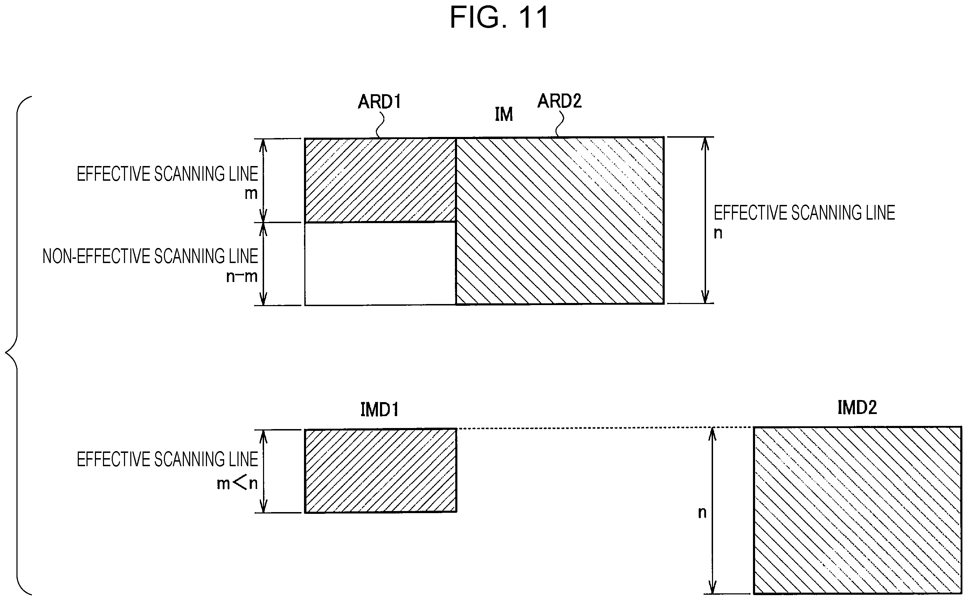

FIG. 11 is a diagram illustrating effective scanning lines in image splitting. The number of scanning lines of the first display device on which the first split image data IMD1 is displayed is defined as m, and the number of scanning lines of the second display device on which the second split image data IMD2 is displayed is defined as n. Each of m and n is an integer of 1 or more, and m < n.

The number of effective scanning lines of the input image data IM is n. The input image data IM is split into left and right sides by a predetermined number of horizontal pixels, with the left side being a first area ARD1 and the right side being a second area ARD2. The number of scanning lines in the first area ARD1 is n, but m is the number of effective scanning lines. The number of effective scanning lines in the second area ARD2 is n, which is the same as the number of effective scanning lines of the input image data IM.

At this time, the first-split-image error determination circuit 123 uses data of effective scanning lines m excluding non-effective scanning lines n-m in the first area ARD1, as the first split image data IMD1. Similarly, the first-expected-value calculation circuit 153 uses the data of the effective scanning lines m excluding the non-effective scanning lines n-m in the first area ARD1, as the first-expected-value split image data IMV1.

The second-split-image error determination circuit 124 uses data of effective scanning lines n in the second area ARD2, as the second split image data IMD2. Similarly, the first-expected-value calculation circuit 153 uses the data of the effective scanning lines n in the second area ARD2, as the second-expected-value split image data IMV2.

In the present embodiment, the circuit device 100 includes the image splitting circuit 160 and the error detection circuit 120. The image splitting circuit 160 splits the input image data IM into the first split image data IMD1 and the second split image data IMD2. The error detection circuit 120 calculates a first error code value from the first split image data IMD1 and compares the first error code value with the first expected value EV1, which is an expected value of the first error code value, thereby performing error detection on the first split image data IMD1. The error detection circuit 120 calculates a second error code value from the second split image data IMD2, and compares the second error code value with the second expected value EV2, which is an expected value of the second error code value, thereby performing error detection on the second split image data IMD2.

According to the present embodiment, it is possible to appropriately perform the error detection on the image after splitting. That is, the error detection is performed on the first split image data IMD1 separated from the input image data IM by comparison of the first error code value with the first expected value EV1. Further, the error detection is performed on the second split image data IMD2 separated from the input image data IM by comparison of the second error code value with the second expected value EV2. Thus, since an error is detected for each image after splitting, an error is substantially detected for the entire input image data IM.

In the present embodiment, the circuit device 100 includes the interface circuit 130. As described with reference to FIG. 8, the interface circuit 130 may externally receive the input image data IM, the first expected value EV1, and the second expected value EV2.

According to the present embodiment, the interface circuit 130 can receive the first expected value EV1 and the second expected value EV2 which are externally calculated, and the error detection circuit 120 can perform the error detection on the first split image data IMD1 using the received first expected value EV1 and perform the error detection on the second split image data IMD2 using the received second expected value EV2.

As described with reference to FIG. 9, the circuit device 100 may include the expected-value calculation circuit 150 that calculates the first expected value EV1 and the second expected value EV2. As described with reference to FIG. 11, the number of effective scanning lines m of the first split image data IMD1 may be smaller than the number of effective scanning lines n of the second split image data IMD2. The expected-value calculation circuit 150 may exclude the pixels of the non-effective scanning line of the first split image data IMD1 out of the input image data IM from the calculation of the first expected value EV1.

According to the present embodiment, even when the number of effective scanning lines m of the first display device, on which the first split image data IMD1 is displayed, is smaller than the number of effective scanning lines n of the second display device, on which the second split image data IMD2 is displayed, the first expected value EV1 can be calculated from the pixels of the effective scanning lines.

Although the present embodiment has been described in detail above, it will be easily understood by those skilled in the art that various modifications can be made without substantially departing from the novel matters and effects of the present disclosure. Therefore, all such modifications are included in the scope of the present disclosure. For example, the terms described together with different terms having a broader meaning or the same meaning at least once in the specification or the drawings can be replaced with the different terms in any part in the specification or the drawings. Further, all combinations of the present embodiment and the modifications may be within the scope of the present disclosure. In addition, the configuration, the operation, and the like of the overlay processing circuit, the image splitting circuit, the error detection circuit, the expected-value calculation circuit, the interface circuit, the circuit device, the display device, the processing device, the display system, and the like are not limited to those described in the present embodiment, and various modifications can be implemented.

## Claims

1. A circuit device comprising:
an overlay processing circuit that performs overlay processing of first input image data on a first area of second input image data and outputs a result of the overlay processing as output image data; and
an error detection circuit that calculates a first error code value corresponding to image data of the first area of the output image data and a second error code value corresponding to image data of a second area not overlapping the first area of the output image data, and performs error detection on the output image data by comparing the first error code value with a first expected value which is an expected value of the first error code value and comparing the second error code value with a second expected value which is an expected value of the second error code value.

2. The circuit device according to claim 1, wherein
the error detection circuit calculates the second error code value from the image data of the second area of the output image data and specific image data embedded in the first area of the output image data.

3. The circuit device according to claim 1, wherein
the error detection circuit calculates the second error code value from the image data of the second area excluding the image data of the first area from the output image data.

4. The circuit device according to claim 1, wherein
the error detection circuit includes
an error-detection-area determination circuit that determines whether each pixel of the output image data belongs to the first area or the second area,
a first-area error determination circuit that calculates the first error code value for a pixel determined to belong to the first area and compares the first error code value with the first expected value, and
a second-area error determination circuit that calculates the second error code value for a pixel determined to belong to the second area and compares the second error code value with the second expected value.

5. The circuit device according to claim 4, wherein
the error-detection-area determination circuit determines, based on coordinate information of the first area, whether each pixel of the output image data belongs to the first area or the second area.

6. The circuit device according to claim 4, wherein
the error-detection-area determination circuit determines whether each pixel of the output image data belongs to the first area or the second area, based on an α channel in which a first value is set to the pixel belonging to the first area and a second value is set to the pixel belonging to the second area.

7. The circuit device according to claim 1, further comprising
an interface circuit that externally receives the first input image data, the second input image data, the first expected value, and the second expected value.

8. The circuit device according to claim 1, further comprising
an expected-value calculation circuit that calculates the first expected value and the second expected value based on the first input image data and the second input image data.

9. The circuit device according to claim 8, wherein
the expected-value calculation circuit includes
a first-expected-value calculation circuit that calculates the first expected value from the first input image data,
an expected-value-calculation-area determination circuit that determines whether each pixel of the second input image data belongs to the second area, and
a second-expected-value calculation circuit that calculates the second expected value for the pixel of the second input image data determined to belong to the second area.

10. A circuit device comprising:
an image splitting circuit that splits input image data into first split image data and second split image data; and
an error detection circuit that performs error detection on the first split image data by calculating a first error code value from the first split image data and comparing the first error code value with a first expected value which is an expected value of the first error code value, and performs error detection on the second split image data by calculating a second error code value from the second split image data and comparing the second error code value with a second expected value which is an expected value of the second error code value.

11. The circuit device according to claim 10, further comprising
an interface circuit that externally receives the input image data, the first expected value, and the second expected value.

12. The circuit device according to claim 10, further comprising
an expected-value calculation circuit that calculates, based on the input image data, the first expected value and the second expected value, wherein
a number of effective scanning lines of the first split image data is smaller than a number of effective scanning lines of the second split image data, and
the expected-value calculation circuit excludes a pixel of a non-effective scanning line of the first split image data out of the input image data from a calculation of the first expected value.

13. A display system comprising:
the circuit device according to claim 1; and
a display device on which the output image data is displayed.

14. The display system according to claim 13, wherein
the display device is a head-up display, a meter panel, a center information display, or an electronic mirror.
